# EUROPEAN PATENT APPLICATION

(11) **EP 3 035 627 A1**
(43) Date of publication of application: **22.06.2016**
(21) Application number: 14307071.2
(22) Date of filing: 18.12.2014
(51) Int. Cl.: H04L 29/06, H04L 12/46, H04W 4/16

(54) **Method of providing coverage extension to an existing mobile network, and corresponding system.**

(71) Applicant: Orange, 75015 Paris (FR)
(72) Inventor: Beardow, Paul, Easton S021 IEN (GB); Bonnefoy, Pierre, 28110 Luce (FR); Oancea, Dragos, 060254 Bucharest (RO); Bour, Guillaume, 92150 Suresnes (FR); Cabiddu, Federico, 92320 Chatillon (FR)
(74) Representative: Vidon Brevets & Stratégie

(57) **Abstract**

A system for routing a call to a UE of a mobile network is provided, where the UE has set up a call diversion service with a phone number when it is out of reach of the mobile network. The phone number is associated with a gateway interconnecting the mobile network with a VoIP platform, which comprises an ingress gateway receiving incoming traffic corresponding to the call to be routed. The ingress gateway comprises:
- A parser, which detects within the incoming traffic an identifier of the UE along with a call diversion condition;
- A checking unit for checking, on the basis of the identifier, an eligibility criteria of the UE to the routing, and an analyser for examining the call diversion condition;
- A forwarding unit for forwarding the call to a VoIP proxy server, when the call diversion condition indicates that the UE is out of reach of the mobile network, and when the user equipment is eligible to the routing.

## Description

### 1. Field of the invention

The invention relates to a method of providing coverage extension to an existing mobile network, whatever its type. More precisely, the invention relates to a method for allowing mobile handset users to receive calls, even in areas where mobile signal coverage is poor or does not exist.

### 2. Background

Most mobile network operators cite mobile network coverage as one of the major subscriber complaints. Many people are unable to make or receive calls in locations that are not economical to provide coverage for or are subject to signal attenuation by buildings or geography.

Providing mobile signal coverage can be very challenging in some regions, even in highly developed countries. Villages, coastal areas and road networks can be subject to very intermittent coverage and poor signal strength due to their remoteness. Many countries have populations that are more widespread, rather than concentrated in cities and providing full coverage is often beyond economic reality.

Additionally, modern buildings can also act as Faraday cages because of insulating materials, with one report estimating that "Mobile networks are losing as much as 88 per cent of their bandwidth thanks to energy-efficient walls and windows".

Even though more and more masts and pico-cells are being installed, the problem is still present and in some cases increasing, especially in modern eco-friendly buildings. This results in mobile handset users being unable to receive acceptable quality calls in these areas.

At present the result of the loss of signal is that incoming calls are diverted to voicemail, or if voicemail is not activated the call fails. Even diverting to voicemail is not an adequate solution, because typically mobile network coverage is required to access operator voicemail, and hence voicemail is not actually accessible for the same reasons that the call could not be taken. Moreover, there are many cases when voicemail is not a subscriber option.

Subscribers with voicemail provided by the operator will only know that contact was attempted when they move into a region with acceptable mobile coverage and receive a SMS (Short Message Service) message or device Push indication to highlight that a new voicemail message is waiting for them. Even worse, subscribers may be out of coverage for a long enough period that the message has been deleted as part of regular inbox compaction.

When a subscriber knows that he/she will be out of the mobile network coverage for a while (for example at home, where the signal quality is poor), he/she may use a call diversion service to forward all incoming calls to his/her fixed line. Actually, subscribers in eco-friendly city housing where insulation is attenuating signals will very likely have access to high-speed optical fibre connections, or at least to existing copper telephony cables.

ETSI (European Telecommunications Standards Institute) and 3rd Generation Partnership Project (3GPP) standards, such as GSM (Global System for Mobile Communication) and LTE (Long Term Evolution), define supplementary service codes that make it possible to query and set certain service parameters including call diversion directly from mobile devices.

Call Diversion (sometimes called call forwarding) has several sub-services for different conditions (or divert reasons). Among them, the "if out of reach" condition allows diverting calls when the subscriber's device is switched off or out of network coverage. This condition occurs when the radio cell cannot contact the device.

The subscriber may use the "if out of reach" condition to activate forwarding of incoming calls to his/her fixed phone, by entering his/her home phone number, among other specific characters, on his/her mobile phone. Hence, when he/she is home, where the mobile network coverage is poor, all incoming calls are forwarded to his/her fixed line.

Call diversion is hence a good way of extending mobile network coverage to home broadband. However, when the subscriber leaves home and enters another area where there is no or poor mobile network coverage, he/she must deactivate the call diversion service, or select a new phone number to which calls should be forwarded. This is not always possible, especially when the subscriber is travelling, or in public places with no access to a fixed line. Moreover, it implies tedious operations, if the subscriber wishes to always forward calls to a fixed line in his/her vicinity.

It would hence be desirable to improve the current situation. More precisely, it would be desirable to provide a method of extending the coverage of an existing mobile network. It would also be desirable to provide a method allowing mobile handset subscribers to receive good quality incoming calls, even in areas where mobile signal coverage is poor or does not exist. It would also be desirable to provide a method of extending voicemail accessibility to mobile users.

### 3. Summary

According to an embodiment of the invention, a system for routing a call to user equipment of a mobile communication network is provided. Said user equipment has set up a call diversion service with a local phone number at least when it is out of reach of said mobile communication network. Said local phone number is associated with a gateway interconnecting said mobile communication network with a Voice over IP platform, and said Voice over IP platform comprises an ingress gateway receiving incoming traffic corresponding to said call to be routed, from said interconnecting gateway.

Moreover, the ingress gateway comprises:
- A parser of said incoming traffic able to detect within said incoming traffic an identifier of said user equipment along with an associated call diversion condition;
- A checking unit for checking, on the basis of said identifier, an eligibility criteria of said user equipment to said routing, and an analyser for examining said associated call diversion condition;
- A forwarding unit for forwarding said call to a Voice over IP proxy server, when said call diversion condition indicates that said user equipment is out of reach of said mobile communication network, and when said user equipment is eligible to said routing.

A system according to an embodiment of the invention thus relies on a novel and inventive approach of extending coverage of mobile communication networks. Actually, the system according to embodiments of the invention advantageously makes use of call diversion to forward incoming calls to handsets via home or public WiFi network and a Voice over IP call bearer. The call may then be answered using this secondary bearer and call data exchanged between subscribers.

Such a system offers a new service to subscribers, which is able to use the out of reach diversion presented when the handset is not on the mobile network to find alternate broadband networks to complete the call. It does this in a manner that is transparent to the subscriber. Mobile coverage is hence extended to isolated regions via broadband connections over copper, satellite or fibre infrastructure.

All the subscriber has to do is set up call diversion on his/her mobile handset, with a local phone number to which calls must be routed when his/her handset is out of reach of the mobile network. Such a local phone number is associated to a gateway, which interconnects the mobile communication network with a Voice over IP platform. The local phone number may be the same for all subscribers to the service, in the same country. Such an interconnecting gateway translates traffic received from the mobile network into SIP ("Session Initiation Protocol") messages and RTP ("Real-time Transport Protocol") media before sending them to an ingress gateway to a Voice over IP platform.

The ingress gateway then parses the incoming traffic, looking for condition for call diversion. If the call has been diverted because the subscriber was out of reach of the mobile network, and if the subscriber is eligible to the new forwarding service according to embodiments of the invention, the ingress gateway then routes the call to a Voice over IP proxy server, which will in turn route the call to the subscriber's mobile handset, through a wireless access point it is connected to.

The system according to embodiments of the invention hence provide coverage through non-operator infrastructure rather than roaming or pico-cell equipment that extend the mobile network by using the same protocols and device hardware. Such a system can extend coverage via any public or private broadband network that the device can connect to.

It must be noted that, throughout this document, the terms mobile communication network designates any kind of network, which may be for example GSM (Global System for Mobile Communications), CDMA (Channel Division Multiple Access), IMS (Instant Messaging System), LTE (Long Term Evolution)...

In the same way, user equipment designate any mobile device capable of placing calls on the mobile network, such as a smartphone or a mobile handset.

According to another embodiment, said Voice over IP proxy server comprises a verifying unit for verifying that said user equipment is registered on said Voice over IP platform and a router for routing said call to said user equipment when it is registered on said Voice over IP platform.

Actually, the key to the invention is that the mobile handset is registered (or may be registered upon demand, as described hereafter) onto a Voice over IP platform via a local WiFi network, either public or private. When the mobile handset is registered, the proxy server may route the incoming call to the wireless access point, which is closest to the mobile handset.

According to a further aspect, the system according to embodiments of the invention also comprises a push server for sending a push notification to register on said Voice over IP platform to said user equipment, when said verifying unit detects that said user equipment is not yet registered on said Voice over IP platform. Said push notification is sent through a wireless access point to which said user equipment is connected.

This can take place whenever an incoming call is detected: a message is sent to the device over WiFi that causes it to immediately register in preparation for the call to be routed over VoIP.

According to another embodiment of the invention, said forwarding unit forwards said call to a voicemail server when said user equipment is eligible to said routing but when said call diversion condition differs from an "out of reach" condition.

Hence, the system according to embodiments of the invention also allows extending voicemail accessibility, on top of mobile coverage. It bridges the operator and broadband networks for telephony, diverting a call when the handset is unreachable and providing a bridging voice service and a voicemail platform that is also accessible via the secondary data connection. Voicemail messages can then also be accessed via the broadband connection when necessary.

According to a further embodiment, said checking unit checks said eligibility criteria by verifying with a Voice over IP subscriber accounting equipment that said identifier belongs to a valid Voice over IP subscriber with valid registered user equipment, and that said Voice over IP subscriber has subscribed to a service for call forwarding.

According to yet a further embodiment, said user equipment sets up a call diversion service with said local phone number for all conditional forwards.

Actually, the most important divert reason is the "if out of reach" condition. This condition occurs when the radio cell cannot contact the device and therefore in the situation where the call needs to be transferred onto the VoIP network. If the subscriber does not require the voicemail feature, then the other conditions may be left in existing states. However the user experience is greatly improved if the "if not answered" and "if busy" diversions are also forwarded to the same voice mail platform as the one within the extending VoIP network. Voicemail messages can then also be accessed via the broadband connection when necessary.

The same local phone number may be used for all divert reasons. Alternately, the number may be different for different call diversion conditions.

According to an aspect of the invention, said local phone number associated with said interconnecting gateway is a Direct Inward Dialled (DID) Number. Such a number may be zero-rated by the operator to reduce subscriber bills.

According to yet a further embodiment, said parser detects said call diversion condition along with a Mobile Station Integrated Services Digital Network (MSISDN) number of said user equipment in a header of a Session Initiation Protocol (SIP) message received from said interconnecting gateway.

According to yet a further embodiment, if said user equipment does not answer the call routed by said Voice over IP proxy server, said router in said Voice over IP proxy server re-routes back said call to said voicemail server.

Hence, in the situation where the subscriber cannot answer, the call may be sent to a voicemail platform that can be accessed via the same WiFi bearer and so the subscriber may retrieve urgent or time critical voice messages without requiring relocation to a region with acceptable mobile signal coverage.

Embodiments of the invention also concern a method of routing a call to user equipment of a mobile communication network, said user equipment having set up a call diversion service with a local phone number at least when it is out of reach of said mobile communication network. Such a method comprises, in an ingress gateway belonging to a Voice over IP platform:
- receiving incoming traffic corresponding to said call to be routed from a gateway interconnecting said mobile communication network with said Voice over IP platform, said local phone number being associated with said interconnecting gateway;
- parsing said incoming traffic to detect within said incoming traffic an identifier of said user equipment along with an associated call diversion condition;
- checking, on the basis of said identifier, an eligibility criteria of said user equipment to said routing, and analysing said associated call diversion condition;
- forwarding said call to a Voice over IP proxy server, when said call diversion condition indicates that said user equipment is out of reach of said mobile communication network, and when said user equipment is eligible to said routing.

According to another embodiment, such a method also comprises forwarding said call to a voicemail server when said user equipment is eligible to said routing but when said call diversion condition differs from an "out of reach" condition.

According to a further embodiment, said checking of said eligibility criteria comprises verifying with a Voice over IP subscriber accounting equipment that said identifier belongs to a valid Voice over IP subscriber with a valid registered user equipment, and that said Voice over IP subscriber has subscribed to a service for call forwarding.

Embodiments of the invention also concern an ingress gateway, belonging to a Voice over IP platform, in a system for routing a call to user equipment of a mobile communication network, which comprises:
- A receiver of incoming traffic corresponding to said call to be routed from a gateway interconnecting said mobile communication network with said Voice over IP platform;
- A parser of said incoming traffic able to detect within said incoming traffic an identifier of said user equipment along with an associated call diversion condition;
- A checking unit for checking, on the basis of said identifier, an eligibility criteria of said user equipment to said routing, and an analyser for examining said associated call diversion condition;
- A forwarding unit for forwarding said call to a Voice over IP proxy server, when said call diversion condition indicates that said user equipment is out of reach of said mobile communication network, and when said user equipment is eligible to said routing.

Embodiments of the invention also concern a computer program product, in particular a computer program on or in an information medium or memory, suitable for implementing the method of the invention. This program can use any programming language, and be in the form of source code, object code, or of intermediate code between source code and object code such as in a partially compiled form, or in any other desirable form for implementing the method according to the invention.

The information medium may be any entity or device capable of storing the programs. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

### 4. Brief description of the drawings

The invention can be better understood with reference to the following description and drawings, given by way of example and not limiting the scope of protection, and in which:
- **Figure 1** discloses the architecture of a system for extending coverage of a mobile communication network according to an embodiment of the invention;
- **Figures 2A to 2C** describe the interactions between components of the system of figure 1 when placing a call according to embodiments of the invention;
- **Figure 3** shows the structure of the VoIP in Gateway, which is part of the system of figure 1.

The components in the figures are not necessarily to scale, emphasis instead being placed upon illustrating the principles of the invention.

### 5. Detailed description

The general principle of the invention relies on the use of call diversion to extend the coverage of a mobile communication network, by diverting incoming calls, through the use of a local phone number, to a Voice over IP platform, when the mobile handset is out of reach of the mobile network; the incoming call is then routed towards the mobile handset, through a wireless access point to which it is connected.

The features of call diversion are first briefly recalled, before describing an embodiment of the invention in details.

ETSI (European Telecommunications Standards Institute) and 3rd Generation Partnership Project (3GPP) standards, such as GSM (Global System for Mobile Communications) and LTE (Long Term Evolution), define supplementary service codes that make it possible to query and set certain service parameters including call diversion directly from mobile devices.

Call Diversion (sometimes called call forwarding) has several sub-services for different conditions (or divert reasons).

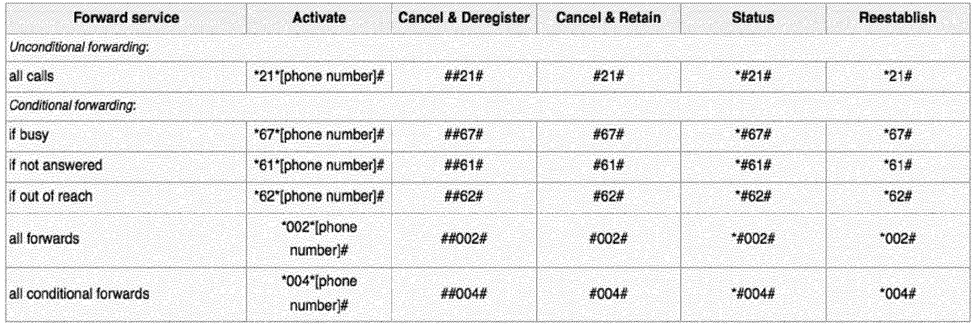

The meanings of these conditions are as follows:
- *all calls -* Divert all incoming voice calls. The subscriber cannot answer incoming calls, only divert the calls to another number. This is typically used to forward calls to a different telephone line.
- *if busy -* Divert incoming calls if the subscriber already is on an active call.
- *if not answered -* Divert incoming calls after the subscriber's device rings for a specified length of time. The subscriber can select the length of time for the device to ring before diverting the call.
- *if out of reach -* Divert calls when the subscriber's device is switched off or out of network coverage.
- *all forwards -* Divert all unconditional and conditional forwards to another number.
- *all conditional forwards -* Divert *"if busy", "if not answered"* and *"if out of reach"* forwards to another number.

As regards the present invention, the most important divert reason is the *"if out of reach"* condition. This condition occurs when the radio cell cannot contact the device and therefore in the situation where embodiments of the invention allow transferring the call onto the VoIP network.

According to a first embodiment of the invention, the other divert conditions may be left in existing states, if the subscriber does not require the voicemail feature.

However the user experience is greatly improved if the *"if not answered"* and *"if busy"* diversions may also be forwarded to a voice mail platform, preferably the same as the one within the extending VoIP network. Voicemail messages can then also be accessed via the broadband connection when necessary.

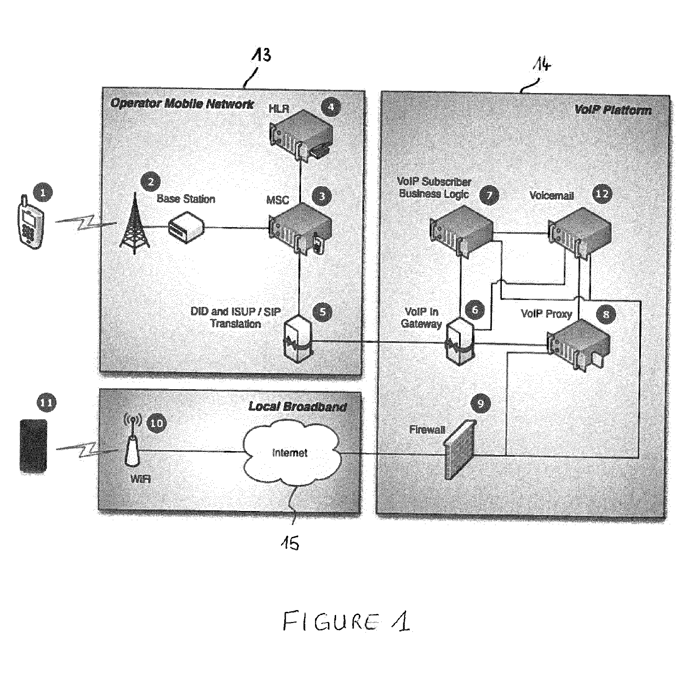

Therefore according to another embodiment of the invention, the recommended forwarding is *"all conditional forwards",* which is enabled by the subscriber entering the following code on his/her device using the dialler keyboard and placing a call: **004*[phone number]#* where the phone number is a local number termed a Direct Inward Dialled (DID) Number that may be zero-rated by the operator to reduce subscriber bills. This DID number connects to a gateway that performs the bridging of the two networks, as will be described below in relation to **figure 1**.

**Figure 1** discloses the architecture of a system for extending coverage of a mobile communication network according to an embodiment of the invention. A subscriber to this coverage extension service is first a subscriber to an operator mobile network 13. He/she has any mobile device 1 that is capable of placing calls on the mobile network. The type of network is not important; it can be GSM, CDMA (Code Division Multiple Access) or IMS (Instant Messaging System) for example. This subscriber is the calling party.

The Base Station 2 is the point of entry for the calling party's mobile device to the mobile network; it connects to the mobile device via a cell tower. When the calling party places a call, it enters the mobile network though base station 2.

The MSC 3 is the Mobile Switching Centre and is responsible for setting up and tearing down calls, handover between networks, routing calls to other MSCs on different networks and call charging operations. This MSC belongs to the called party operator and may also be the MSC of the calling party operator if they are both subscribers to the same operator network. If they are on different operators, then the MSC of the calling party will forward the call to the called party MSC.

The HLR 4 is the Home Location Registrar and stores account information about the mobile subscriber, including the call diversion settings and tariff options. If the called party is roaming on a different network, this information will be in the VLR, the Visitor Location Registrar that serves the same purpose, but does not appear on **figure 1** for sake of simplicity.

The DID and ISUP/SIP Translation Gateway 5 is an interconnection to the network that provides a local PSTN (Public Switched Telephone Network) telephone number and software applications that are able to translate ISUP (Integrated Services Digital Network User Part) messages and media to SIP/RTP streams. In other words, the DID and ISUP/SIP Translation Gateway 5 is a gateway interconnecting the operator mobile network and the Voice over IP network. ISUP is part of the SS7 (Signaling System 7) standard and is used to set up calls in the PSTN. SIP (Session Initiation Protocol) and RTP (Real-time Transport Protocol) are the signalling and media protocols for VoIP calling.

The VoIP In Gateway 6 is a gateway, which has been specifically designed for the service according to embodiments of the invention, and that is able to route calls within the VoIP system. It uses information in the incoming SIP traffic to discover the diversion condition and combines this with account information to decide where to route the call, to voicemail or the connected device.

VoIP Subscriber Business Logic 7 is used to store preferences for the VoIP subscriber account. This will contain information such as eligibility for the forwarding service, device information for push services (to wake up the VoIP application on the device) and address books to personalise voicemail services.

The VoIP Proxy 8 is the routing component for active calls when the call is being forwarded to the device rather than voicemail, i.e. when the diversion is condition is *"if out of reach".* It can in turn re-route the call back to voicemail if the call is not answered via the VoIP transport. The Proxy 8 is able to manage the signalling and media set up and tear down for the call and also works in conjunction with an accounting database to record details of the call for legal, call quality analysis and accounting purposes.

A Firewall 9 provides a secure interface between the VoIP platform 14 and the open Internet 15.

A WiFi router or access point 10 provides the connection point for the called party's mobile device 11 to the broadband provider network and open Internet 15.

The Called Party's Mobile Device 11 has an installed VoIP application that is able to accept incoming VoIP calls and is either registered on the VoIP platform 14 or is able to be woken from background operation to connect to the platform. The user may also decide to accept, ignore or reject incoming VoIP calls.

The Voicemail platform 12 supports playback of greetings, storage, playback and deletion of recorded messages from both mobile operator and VoIP connections.

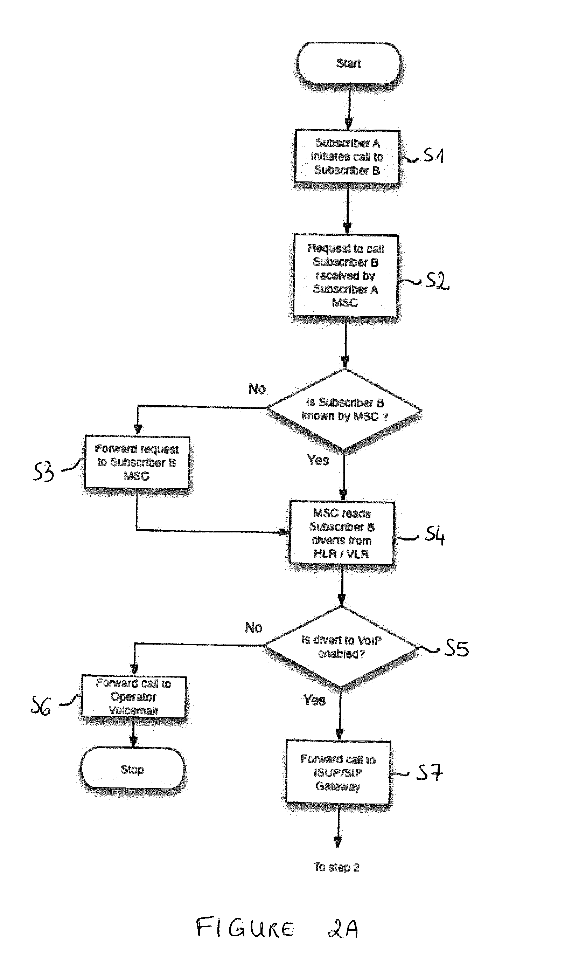

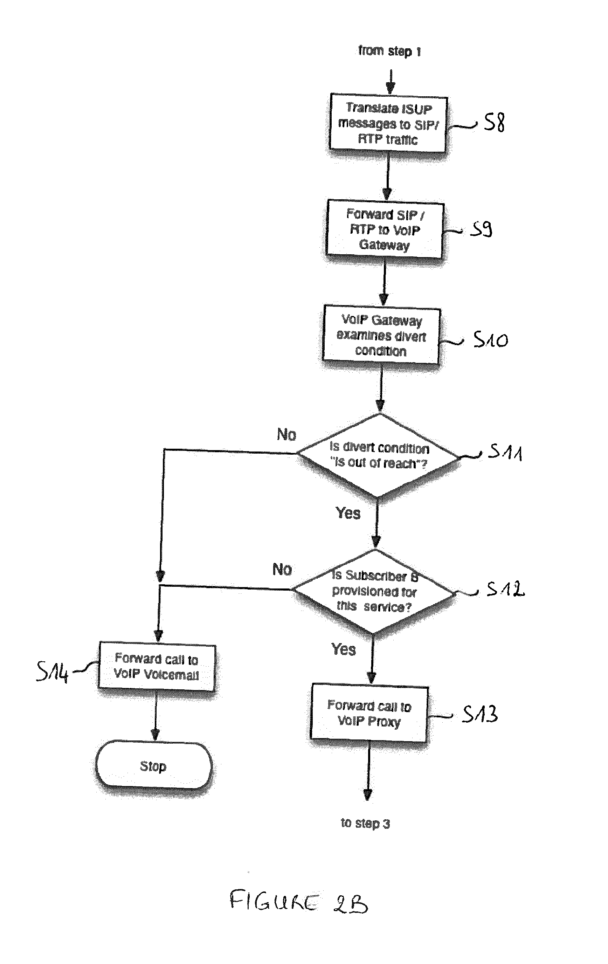

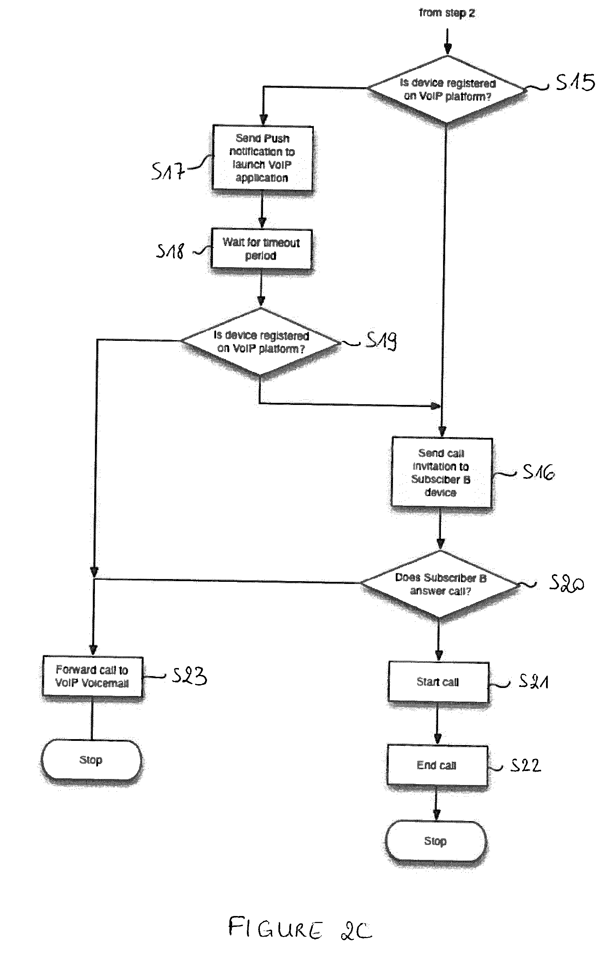

All the devices and entities on figure 1 cooperate for delivering to the subscriber a service for extending coverage of the mobile network 13. **Figures 2a****,** **2b** **and** **2c** describe their interactions when the calling party places a call.

**Figure 2a** focuses on the calling party's call diversion to DID and ISUP/SIP translation gateway 5. Hereafter, for sake of simplification, the calling party is called Subscriber A, while the called party is called Subscriber B.

At step S1, Subscriber A dials on his/her mobile handset 1 the MSISDN (Mobile Station ISDN Number) telephone number of Subscriber B, associated to mobile handset 11. This is accomplished by the standard interface on the device 1, which is either a dialler application on a smartphone or a keyboard on a feature or basic handset.

The call is initiated via GSM, CDMA or IMS signalling (or any other type of signalling, depending on the type of mobile communication network 13) between the device 1 and the Base Station 2. The base station 2 passes on the signalling messages to the MSC 3 of the operator on which Subscriber A is currently connected. The request to call Susbrciber B is received by Subscriber A MSC 3 at step S2.

The MSC 3 will then try to establish the location of Subscriber B so that the call set up can continue. It does this by consulting the HLR 4. If Subscriber B is already registered on this MSC 3, the MSC 3 attempts to set up the call.

If Subscriber B is not currently registered on this MSC 3 (e.g, roaming), then the HLR 4 contains the information required to find which MSC they currently reside, termed the visited MSC (not illustrated on figure 1, for sake of clarity). The call is forwarded to the visited MSC at step S3, which then consults a VLR (Visitor Location Registrar) to obtain Subscriber B information and attempts to set up the call.

If Subscriber B is able to take the call, the call starts and completes as normal.

However, if Subscriber B does not respond, then the call diversion logic is started within the MSC at step S4. The first step is to consult the HLR (or VLR when roaming) for the new telephone number to divert the call to. The number may be different for different call diversion conditions. For a given call diversion condition, the number may be the same for all subscribers to the same operator mobile network located in the same area.

At step S5, the MSC checks that subscriber B has enabled diversion to VoIP by using a local telephone number associated at least to the call diversion condition "is out of reach". This number will be the DID number for the ISUP/SIP translation gateway 5.

If divert to VoIP is not enabled, the call is forwarded to the operator voicemail at step S6.

Otherwise, the call is forwarded to the DID number and thence onto the ISUP/SIP translation application at step S7. The interconnecting gateway 5 translates the ISUP signalling and media into SIP signalling and RTP media at step S8 (see **figure 2B**).

In order to have a single number for the user to configure coverage extension functionality and VoIP platform Voicemail, the SIP DID service must correctly translate a series of ISUP codes and Fields into the correct SIP Diversion Header number/reason.

The ISUP information must contain the information listed above. ISUP/SIP translation is specified in RFC 5806 (Request for Comments 5806 - Diversion Indication in SIP - March 2010 - IETF SIP Working Group).

The ISUP IAM (Initial Address Message) message must be converted by the DID service into a SIP INVITE with the following translation of ISUP fields into SIP fields.

| **Entity** | **ISUP Fields** | **SIP Fields** |
|---|---|---|
| Subscriber A | Generic Number | From |
| Subscriber A | Calling Party Number | Contact and P-Asserted-Identity |
| Subscriber B | Original Called Number or Redirecting Number | Diversion name-addr |
| SIP Trunking | Called Party Number | R-URI and To |
| SIP Trunking | Redirecting Reason | Diversion diversion-reason param |

The interconnecting gateway 5 should support the following requirements:
- It must have the capacity to handle simultaneous calls (ideally unlimited calls on providing a single forwarding number for each country).
- The DIDs must be part of a numbering plan valid for "conditional call forwarding" service in major domestic Mobile Network Operators.
- It must have support for A-law and/or µ-law G711 codecs. A beneficial upgrade is if it also supports other codecs with different compression, quality (narrowband and wideband) and Discontinuous Transmission (DTX - no data transmitted when voice input is silent) capabilities.

**Figure 2B** focuses on the interactions between entities located between the DID ISUP/SIP translation gateway 5 and the VoIP proxy server 8 on **figure 1**.

At step S9, the DID ISUP/SIP translation gateway 5 forwards SIP/RTP incoming traffic to VoIP ingress gateway 6.

The VoIP in Gateway 6 is a component that has been developed specifically for embodiments of the invention, and is not standard telecoms or VoIP equipment, although it is able to receive and respond to the SIP and RTP protocols.

The VoIP in Gateway 6 examines the divert condition data and MSISDN from the incoming SIP traffic at step S10.

At step S11, it checks if the divert condition is "is out of reach". If yes, it then checks at step S12 the MSISDN against the VoIP Subscriber Business Logic 7 to ensure that:
- The MSISDN belongs to a valid VoIP subscriber;
- The Subscriber has a provisioned service for call forwarding from this operator;
- It has valid devices registered on the service.
If all these cases are true, then the VoIP In gateway 6 forwards the call to the Proxy Server 8 at step S13.

If the divert condition is any value other than "is out of reach", then the call is forwarded to the Voicemail server 12 at step S14.

When the condition is "is out of reach" the forwarded SIP traffic is interpreted by the Proxy Server 8 and used to attempt to reach the Subscriber B device 11 via the Internet 15, as described below in relation to **figure 2C****.**

The first stage in this process is to check if the Subscriber B device is already registered on the VoIP service (step S15). If so, the call setup can immediately proceed and the SIP invitation message is sent to the device 11 at step S16.

If Subscriber B device 11 is not registered, then a Push notification is sent to the device 11 via a push server (not shown) and the Internet connection at step S17. If the device 11 is connected to the Internet 15, then the Push notification will be used on the device 11 to inform Subscriber B that there is an incoming call from Subscriber A.

If Subscriber B accepts the notification, the device 11 will launch or bring a VoIP application from the background into foreground operation so that the device 11 can register on the VoIP platform 14. After waiting for timeout period at step S18, proxy server 8 checks again at step S19 that subscriber B is now registered on the VoIP platform 14.

Once Subscriber B registers, proxy server 8 sends call invitation to subscriber B device 11 at step S16. If subscriber B accepts the call invitation (step S20) and sets up the call, the call will then proceed with Subscriber A correctly identified on the device 11 and with normal telephony operations available (hang up, mute, etc.). The call starts at step S21 and ends at step S22.

If, at step S20, Subscriber B rejects the call, or ignores it, the VoIP Proxy 8 will forward the call to the Voicemail platform 12 at step S23.

Subscriber B may listen to his/her voicemail messages on the VoIP voicemail platform 12, even if he/she is out of the coverage area of the operator mobile network 13.

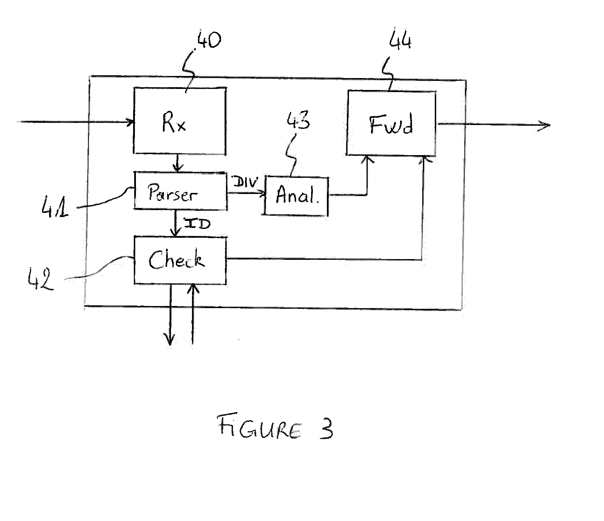

**Figure 3** shows the structure of the VoIP in Gateway 6, which is part of the system described above. The VoIP in Gateway 6 comprises a receiving unit Rx 40 for receiving incoming traffic from the DID and ISUP/SIP translation gateway 5. Such incoming traffic corresponds to the call initiated by subscriber A, which must be routed through the Voice over IP platform towards subscriber 2.

The VoIP in Gateway 6 also comprises a parser 41, for parsing the incoming traffic received by the receiving unit 40. Parser 41 is able to detect within the received incoming traffic an identifier ID of Subscriber B along with an associated call diversion condition DIV.

It also comprises a checking unit CHECK 42 for checking, on the basis of the identifier ID, an eligibility criteria of Subscriber B to the routing service. As described above and illustrated by both arrows coming in and out from checking unit 42, such a check may be performed by asking the VoIP Subscriber Business Logic 7.

It also comprises an analyser ANAL 43, which examines the call diversion condition DIV, to detect whether it is an "out of reach" divert condition or any other divert condition.

It further comprises a forwarding unit FWD 44 for forwarding the incoming call when the checking unit CHECK 42 confirms that subscriber B is eligible to the routing service. Depending on the call diversion condition DIV analysed by analyser ANAL 43, the forwarding unit FWD 44 either forwards the call to the Voice over IP proxy server 8, when the call diversion condition indicates that the user equipment is out of reach of the mobile communication network, or to the voicemail platform 12 otherwise.

Embodiments of the invention allow extending mobile coverage and voicemail accessibility to isolated regions via broadband connections over copper, satellite or fibre infrastructure. The unique aspect of this service is that it is able to use the out of reach diversion presented when the handset is not on the mobile network to find alternate broadband networks to complete the call. It also does this in a manner that is transparent to the subscriber.
The invention also manages all transcoding between different voice media types and signalling systems so that a high quality sound experience is maintained.

It hence provides coverage extension through non-operator infrastructure rather than roaming or pico-cell equipment that extend the existing mobile network by using the same protocols and device hardware. This invention can extend coverage via any public or private broadband network that the device can connect to.

## Claims

1. A system for routing a call to a user equipment of a mobile communication network, said user equipment having set up a call diversion service with a local phone number at least when it is out of reach of said mobile communication network,
wherein said local phone number is associated with a gateway interconnecting said mobile communication network with a Voice over IP platform, and wherein said Voice over IP platform comprises an ingress gateway receiving incoming traffic corresponding to said call to be routed, from said interconnecting gateway,
Said ingress gateway comprising:
- A parser of said incoming traffic able to detect within said incoming traffic an identifier of said user equipment along with an associated call diversion condition;
- A checking unit for checking, on the basis of said identifier, an eligibility criteria of said user equipment to said routing, and an analyser for examining said associated call diversion condition;
- A forwarding unit for forwarding said call to a Voice over IP proxy server, when said call diversion condition indicates that said user equipment is out of reach of said mobile communication network, and when said user equipment is eligible to said routing.

2. The system of claim 1, wherein said Voice over IP proxy server comprises a verifying unit for verifying that said user equipment is registered on said Voice over IP platform and a router for routing said call to said user equipment when it is registered on said Voice over IP platform.

3. The system of claim 2, wherein it also comprises a push server for sending a push notification to register on said Voice over IP platform to said user equipment, when said verifying unit detects that said user equipment is not yet registered on said Voice over IP platform.

4. The system of claim 3, wherein said push notification is sent through a wireless access point to which said user equipment is connected.

5. The system of any preceding claim, wherein said forwarding unit forwards said call to a voicemail server when said user equipment is eligible to said routing but when said call diversion condition differs from an "out of reach" condition.

6. The system of any preceding claim, wherein said checking unit checks said eligibility criteria by verifying with a Voice over IP subscriber accounting equipment that said identifier belongs to a valid Voice over IP subscriber with valid registered user equipment, and that said Voice over IP subscriber has subscribed to a service for call forwarding.

7. The system of any preceding claim, wherein said user equipment sets up a call diversion service with said local phone number for all conditional forwards.

8. The system of any preceding claim, wherein said local phone number associated with said interconnecting gateway is a Direct Inward Dialled (DID) Number.

9. The system of any preceding claim, wherein said parser detects said call diversion condition along with a Mobile Station Integrated Services Digital Network (MSISDN) number of said user equipment in a header of a Session Initiation Protocol (SIP) message received from said interconnecting gateway.

10. The system of any preceding claim, wherein, if said user equipment does not answer the call routed by said Voice over IP proxy server, said router in said Voice over IP proxy server re-routes back said call to said voicemail server.

11. A method of routing a call to user equipment of a mobile communication network, said user equipment having set up a call diversion service with a local phone number at least when it is out of reach of said mobile communication network,
wherein it comprises, in an ingress gateway belonging to a Voice over IP platform:
- receiving incoming traffic corresponding to said call to be routed from a gateway interconnecting said mobile communication network with said Voice over IP platform, said local phone number being associated with said interconnecting gateway;
- parsing said incoming traffic to detect within said incoming traffic an identifier of said user equipment along with an associated call diversion condition;
- checking, on the basis of said identifier, an eligibility criteria of said user equipment to said routing, and analysing said associated call diversion condition;
- forwarding said call to a Voice over IP proxy server, when said call diversion condition indicates that said user equipment is out of reach of said mobile communication network, and when said user equipment is eligible to said routing.

12. The method of claim 11, wherein it also comprises forwarding said call to a voicemail server when said user equipment is eligible to said routing but when said call diversion condition differs from an "out of reach" condition.

13. The method of claim 11 or 12, wherein said checking of said eligibility criteria comprises verifying with a Voice over IP subscriber accounting equipment that said identifier belongs to a valid Voice over IP subscriber with a valid registered user equipment, and that said Voice over IP subscriber has subscribed to a service for call forwarding.

14. An ingress gateway, belonging to a Voice over IP platform, in a system for routing a call to user equipment of a mobile communication network,
wherein it comprises:
- A receiver of incoming traffic corresponding to said call to be routed from a gateway interconnecting said mobile communication network with said Voice over IP platform;
- A parser of said incoming traffic able to detect within said incoming traffic an identifier of said user equipment along with an associated call diversion condition;
- A checking unit for checking, on the basis of said identifier, an eligibility criteria of said user equipment to said routing, and an analyser for examining said associated call diversion condition;
- A forwarding unit for forwarding said call to a Voice over IP proxy server, when said call diversion condition indicates that said user equipment is out of reach of said mobile communication network, and when said user equipment is eligible to said routing.

15. Computer program **characterized in that** it comprises program code instructions for the implementation of the steps of the method of claims 11 to 13 when the program is executed by a processor.
